# EUROPEAN PATENT SPECIFICATION

(11) **EP 1 767 029 B1**
(45) Date of publication and mention of the grant of the patent: **21.05.2014**
(21) Application number: 05744439.0
(22) Date of filing: 02.06.2005
(51) Int. Cl.: H04W 4/02

(54) **PROCESSING OF LOCATION-BASED INFORMATION**
VERARBEITUNG VON AUF DER POSITION BASIERENDEN INFORMATIONEN
TRAITEMENT D'INFORMATIONS BASEES SUR LA LOCALISATION

(30) Priority: 17.06.2004 FI 20045228
(43) Date of publication of application: 28.03.2007
(73) Proprietor: Nokia Corporation, 02150 Espoo (FI)
(72) Inventor: KEKONEN, Janne, FI-90540 Oulu (FI)
(74) Representative: Kolster Oy Ab
(86) International application number: PCT/FI2005/050188
(87) International publication number: WO 2005/125241

(56) References cited:
- EP-A1- 1 406 428
- EP-A2- 1 353 485
- WO-A1-02/089342
- WO-A2-01/76120
- WO-A2-02/052815
- WO-A2-2004/021218
- US-A1- 2003 006 911
- US-A1- 2003 065 805
- US-A1- 2003 135 581
- US-B1- 6 587 835

## Description

### FIELD

The invention relates to a method for processing location-based information in a mobile terminal, to a mobile terminal, and to a computer program product that encodes a computer process for processing location-based information in the mobile terminal.

### BACKGROUND

The supply of commercial and general-purpose services can be extended to comprise location-based services, i.e. services dependent on the location of the user, by using wireless data transmission technology. Examples of such services are location-based news and weather services, event advertisements, tourist guides, timetable services, shop and restaurant advertisements, map and positioning services, and search and entertainment services.

According to the prior art, location-based information is transmitted either as SMS (Short Message System) messages or by using push technology as service messages to a terminal. A great deal of location-based messages may be received, and the user has to read each message separately, accept the storage of each message, or delete the message. This causes extra and unnecessary trouble to the user, especially if s/he is not interested in every type of location-based information. The user also needs to delete old messages stored earlier. The information in the stored messages may also be outdated before the user has time to utilize it.

WO 2004/021218 discloses an apparatus receiving location-based content in a list organized by location conditions.

In WO 02/052815, an idle screen of a mobile telephone device is used to show updated information of a kind from a source selected by a user (e.g. financial information, news, traffic etc.). Placing information of interest to the user in the idle screen makes that information instantly accessible without the user having to navigate to the required function (e.g. a micro-browser) and select it.

US 2003/065805 discloses a system, method, apparatus and computer program product for providing location based functions and mobile e-commerce. Programming controls the operation to provide functions based on location data, to facilitate commercial exchanges by wirelessly exchanging payment and product information with venders, to identify services such as venders meeting selection criteria, to wirelessly exchange information with other users and systems, and other functions and services.

US 2003/006911 discloses an interactive advertising system for providing interactive multimedia content to a client positioned in close proximity to an advertising display unit, the interactive advertising system comprising an advertising server, a data communications network, and an advertising platform. The advertising server stores client and advertising databases which contain records relating to the types of clients and the types of advertisements. The advertising server is coupled to the advertising platform over the communications network. The advertising platform comprises a multimedia display, a platform controller, and a GPS receiver. The multimedia display is configured and is controlled by the platform controller to provide interactive multimedia content to a client according to the existing conditions. Conditions can include the specific demographic or psychographic profile of the client, the time of day and the geographical position of the advertising platform. The client can interact with the advertising platform in response to multimedia content and receive coupons and/or purchase items offered through the displayed advertising. The system continuously attracts new clients and tracks, records and quantifies client information over time.

WO 01/76120 discloses a software scheduling agent. The software scheduling agent is part of a probabilistic modelling system in which the scheduler operates to perform constrained random variation with selection. Digital content is generated, organized, and stored on a communication network and/or client devices. An electronic digital content wrapper, which holds information in the form of data and metadata related to the digital content is associated with each item of digital content. Contextual profiles for each user and each item of digital content are established by the users and the network and maintained by a service provider on the communication network. The software scheduling agent compares the contextual digital content profile for each item of digital content to the contextual user profile for each user to determine which digital content should be offered for presentation to each user. The comparison and determination of which items of digital content should be offered for presentation to which users is performed by a process of constrained random variation used to determine which items of digital content would most likely be relevant or interesting to the user.

US 2003/135581 discloses a method for distributing information based on a geographic location determined for the information. The method receives a set of information, and a geographic location profile of a user. The method determines a geographic location based on the set of information. The method appends the geographic location to the set of information. The method then sends, through a network, the set of information to a machine to be used by the user depending on (i) the geographic location appended to the set of information and (ii) the geographic location profile of the user. The set of information includes information on at least one of news, business, entertainment, sports, and people. The geographic location profile of the user includes a geographic location of interest to the user.

US 6 587 835 discloses a system in which a handheld computing device may be used to provide a user with shopping assistance services. A shopping assistance service may allow a user to obtain directory information for a shopping mall. The location of the handheld computing device may be monitored. Services may be provided to the user based on the location of the handheld computing device.

### BRIEF DESCRIPTION

It is an object of the invention to provide an improved method for processing location-based information in a mobile terminal, an improved mobile terminal, and an improved computer program product for encoding a computer process for processing location-based information in the mobile terminal. The present invention is defined by the independent claims. Embodiments are defined in the dependent claims.

According to an example, there is provided a method for processing location-based information in a mobile terminal, the method comprising: receiving at the mobile terminal location-based information related to the location of the terminal from at least one transmitter unit; displaying the location-based information to the user dynamically using a specific menu-type user interface component configured to display the location-based information, in which user interface component the location-based information is divided into categories by subject. The location-based information is transmitted wirelessly using push technology, and the method further comprises: receiving the location-based information in a predefined service area for transmitting the location-based information; and displaying the received location-based information without determining the location of the mobile terminal.

According to another example, there is provided a computer program product embodied as a carrier medium carrying a computer-executable program comprising computer program code means adapted to perform the above-described method steps, when said program is run on a computer.

According to another example, there is provided a mobile terminal comprising: means for receiving location-based information related to the location of the terminal from at least one transmitter unit; means for displaying the location-based information to the user dynamically using a specific menu-type user interface component configured to display the location-based information, in which user interface component the location-based information is divided into categories by subject. The location-based information is transmitted wirelessly by using push technology, and the mobile terminal further comprises: means for receiving the location-based information in a predefined service area for transmitting the location-based information; and means for displaying the received location-based information without determining the location of the mobile terminal.

According to another example, there is provided a system for transmitting location-based information, comprising: a server unit arranged to define content of the location-based information and an area in which the location-based information is transmitted; at least one transmitter unit arranged to transmit the location-based information wirelessly to at least one mobile terminal within a service area of the at least one transmitter unit. The server unit is arranged to determine an area within which the location-based information is transmitted by restricting the number of transmitter units transmitting the location-based information or a service area of the transmitter units transmitting the location-based information.

Because the received location-based messages are automatically transferred to the dynamic user interface component, the actions of the user are advantageously not needed to individually 25 process each message. This makes the reception of location-based service messages considerably user-friendlier; any location-based information interesting to the user is constantly available in the user interface component, whereas the user need not even notice any information that is unimportant to him or her - even though it, too, was available in the user interface component. The user interface component operates dynamically, which means that new messages can be transferred to the user interface component for the user to access, the information in the user interface component can be updated, if the information content changes, and outdated information can be deleted from the user inter-face component. This way, uptodate location-based information is constantly available to the user.

### LIST OF FIGURES

The invention will now be described in greater detail by means of preferred embodiments and with reference to the attached drawings, in which
Figure 1 illustrates the provision of location-based information,
Figure 2 is a block diagram showing an embodiment of a mobile terminal, and a transmitter unit connected to the terminal and transmitting location-based information,
Figure 3 illustrates one embodiment of the computer program structure of the mobile terminal,
Figure 4 shows an embodiment of a user interface component, and
Figure 5 is a flow chart illustrating a method for processing location-based information in a mobile terminal.

### DESCRIPTION OF EXEMPLARY EMBODIMENTS

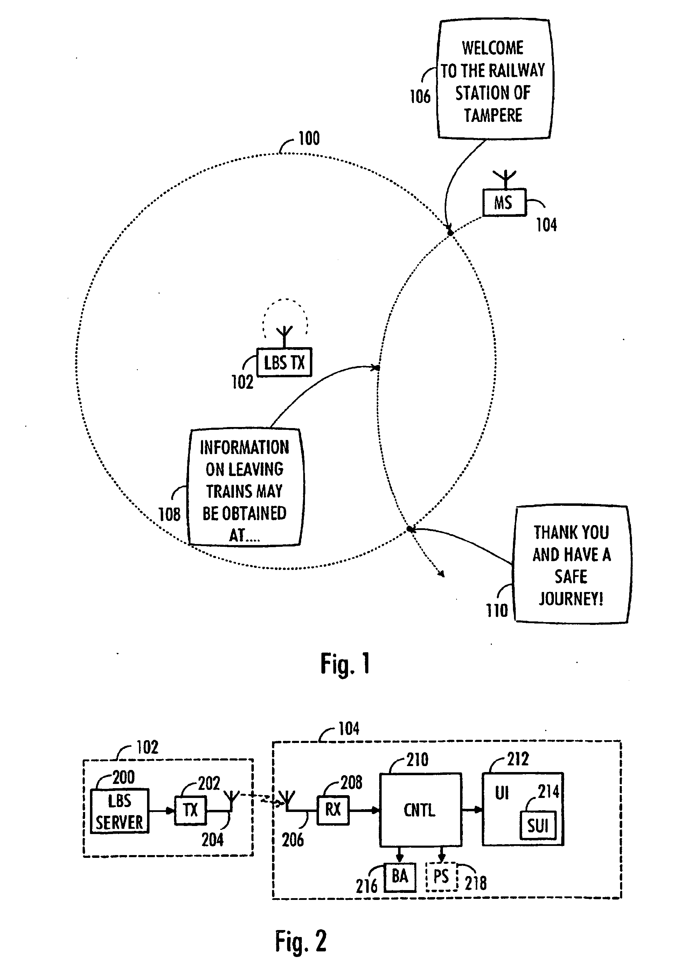

Figure 2 shows one example of the structure of a mobile terminal 104 configured to receive location-based information. In addition, it shows an example of a transmitter system 102 providing location-based information and connected to the terminal 104. The terminal 104 can be a device suited for data transmission anywhere, such as a subscriber terminal of a mobile system, a portable computer equipped with a telecommunications connection, a PDA (Personal Digital Assistant) device, or any other corresponding transceiver unit. The terminal 104 can also be a receiver unit specifically designed for processing location-based information.

The connection between the terminal 104 and transmitter system 102 can be implemented using wireless data transmission technology. Wireless data transmission technology refers herein to any system that enables wireless data transmission to mobile terminals within the service area of the system. The system may be GSM (Global System for Mobile Communications), GPRS (General Packet Radio Service), UMTS (Universal Mobile Telecommunications System), or any other corresponding mobile system, a system employing the Bluetooth® or IrDA (Infrared Data Association) data transmission technology, or a WLAN (Wireless Local Area Network) system. The area within which location-based information is transmitted can be determined by defining the location coordinates within which the information is transmitted, or by restricting the number or service area of transmitter units transmitting location-based information. In the first case, the movement of users can be monitored using an appropriate positioning method, and when the user is within the service area, location-based information is transmitted to his or her terminal. The positioning system can for instance be a GPS (Global Positioning System) system, an E-OTD (Enhanced Observed Time Difference) system or a corresponding positioning system based on triangulation, or - if a more approximate positioning is sufficient - a transmitter unit is determined, in the service area of which the terminal moves.

Let us next examine the structure of the mobile terminal 104 with reference to Figure 2. The terminal 104 of Figure 2 comprises an antenna 206 and a receiver 208 that can be a prior-art radio receiver and operate in a Bluetooth® data transmission system, for instance. In addition, the terminal 104 comprises a processing unit 210 that controls and monitors the functions of the terminal 104, such as the processing of a received radio signal and the management of the components of the user interface 212. The processing unit 210 also controls the reception of location-based information and the dynamic processing thereof in the terminal 104.

The dynamic processing of location-based information comprises identifying a received message as a location-based message, storing the message in the terminal, modifying the location-based information, if the sender of the location-based information changes the content of the location-based information, and deleting outdated location-based information from the terminal.

The processing unit 210 can process the location-based information under the control of a message processing application implemented by software and installed in the terminal 104. The processing unit 210 is today generally implemented as a digital signal processor (DSP) that contains any software necessary to control the terminal 104, but various hardware solutions - such as ASIC (Application-Specific Integrated Circuit) - are also possible.

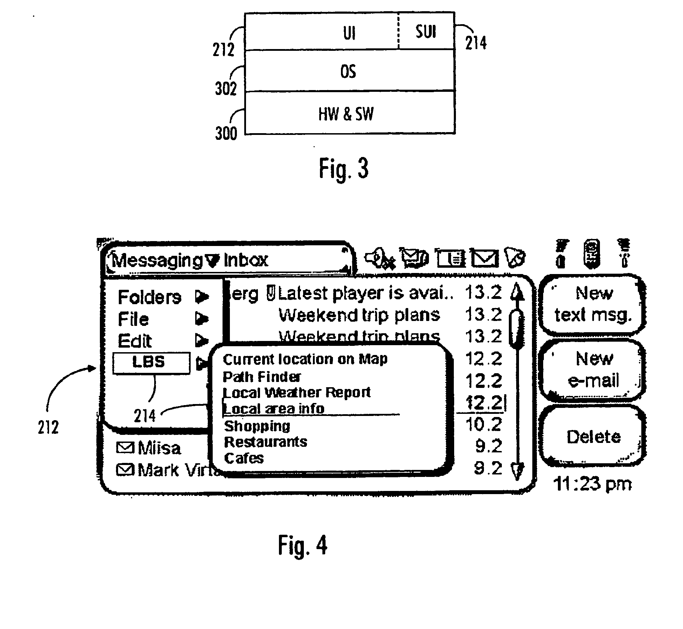

The terminal 104 can also comprise a positioning system 218 or the terminal 104 can be connected to an external positioning system. The positioning system can be used when checking whether the terminal 104 is in an area in which location-based information is transmitted. The terminal 104 also typically comprises a voltage source 216, which can be a chargeable battery, for example. The terminal 104 also comprises a user interface 212 comprising a display, a management unit - such as a keyboard or touch screen **-** and an operating system. The user interface 212 also comprises a user interface component 214 designed to display location-based information. The user interface component 214 can be a menu-type solution as shown in Figure 4, in which the location-based information is divided into categories by subject, on the basis of which the user finds the desired location-based information. The user interface component 214 can also be a separate software application which when executed displays the available location-based information to the user. The software application can be an additional component to the message processing application or a software application separate from the message processing application.

Figure 3 shows an example of the software layers of the mobile terminal 104. The hardware and the software 300 controlling the hardware - especially the processing unit 210 - constitute the lowest layer. The operating system 302 controls the initiation and execution of the software in the terminal 104 and thus acts as an interface between the hardware and software. The operating system can for instance be Symbian OS used generally in mobile stations. The software in the terminal 104 comprises the user interface 212. One component of the user interface 212 is the dynamic user interface component 214 designed for displaying location-based information.

The above thus describes the mobile terminal 104 having a data transmission connection to a transmitter system 102 transmitting location-based information. The transmitter system may comprise a server unit 200, transmitter unit 202, and antenna 204. The server unit 200 defines the content of the location-based information to be transmitted and the area in which the location-based information is transmitted. Even though in Figure 2, the server unit 200 is only connected to one transmitter unit 202, it can also be connected to several transmitter units, thus offering location-based information in a wider area. The transmitter system 102 can thus be a radio data transmission system or a part thereof or a single transmitter unit that transmits location-based information within its own service area.

Figure 1 shows an example of the invention. The mobile terminal 104 arrives at the service area 100 of the transmitter unit 102 transmitting location-based information, in this case at a railway station. When arriving at the service area 100, the terminal 104 starts to receive location-based information related to the service area 100 as service messages 106 transmitted using push technology. Controlled by the message processing application, the terminal 104 identifies the received message as location-based information and stores the information in the message in the terminal 104. Controlled by the message processing application, the terminal also updates the content of the user interface component 214 containing location-based information so that the received location-based information becomes available to the user. A notification on the new content in the user interface component 214 containing location-based information is forwarded to the user of the terminal 104. The user can be notified using an icon on the display of the terminal 104, an audio or vibration signal or some other known indication method.

When arriving at a railway station, the user of the terminal 104 may need information on train timetables, and opens from the user interface component 214 containing location-based information the category containing local information to find information related to the railway station, such as timetables. The timetable information may have been transmitted to the terminal 104, in which case it can be read directly from the user interface component 214, or only information on where to find timetable information may have been transmitted to the terminal 104. In the latter case, the URL (Uniform Resource Locator) address of an Internet web page may have been transmitted to the terminal, and if the user so desires, the terminal 104 can open the web page. It is also possible that information on where the timetables of the railway station are located is transmitted to the terminal. The message can be similar to 108, for instance.

When the terminal 104 exits the service area 100 of the transmitter unit 102 transmitting location-based information, the terminal, controlled by the message processing application, deletes the outdated information from the user interface component 214 containing location-based information. The outdated information can also be left in the user interface component 214 for the user or it can be deleted in accordance with a criterion defined by the user, after a specific time, for instance. A message similar to 110 can also be left in the user interface component 214 for a specific time.

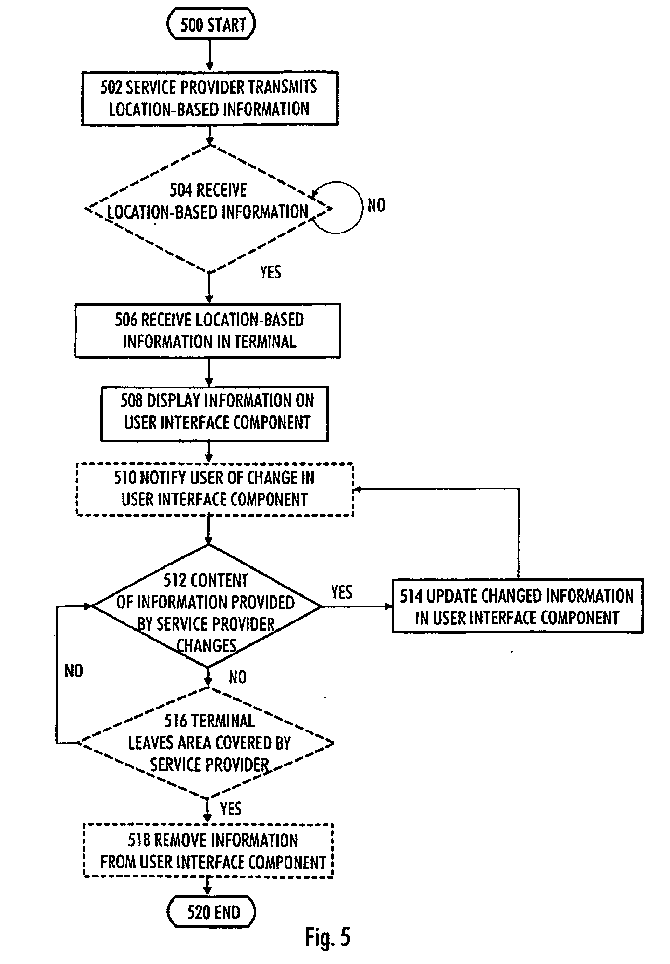

The following describes a method for processing location-based information in a mobile terminal with reference to Figure 5. The execution of the method is started in step 500, after which step 502 is executed, i.e. a transmitter unit transmitting location-based information transmits location-based messages in its service area by using push technology.

Next, step 504 is executed, in which the routine checks whether the mobile terminal is receiving location-based messages. This comprises checking the location of the terminal and the configuration of the terminal. The location of the temninal can be determined for instance by using a positioning system integrated to the terminal or a positioning system connected to the terminal. Positioning can also be left out, in which case location-based messages can be received within the service area of the transmitter system providing location-based information. By positioning, it is thus possible to define more accurately the area in which location-based information is transmitted. Checking the configuration of the terminal comprises for instance checking whether the terminal is configured to receive location-based messages. The terminal may be configured to receive all location-based message, only certain types of location-based messages or not to receive any location-based messages. The configuration of the terminal may be managed by the user.

If the terminal fulfils the criteria, the terminal receives a location-based message in step 506 which comprises identifying the received message as a location-based message and storing the message in the terminal. In the terminal, the processing of the message can be controlled by a message processing application implemented by software. After this, step 508 is executed, in which the received location-based information is displayed to the user in a specific user interface component designed to display location-based information. The user interface component can be a menu-type solution as shown in Figure 4, or a separate software application operating either as an additional component to the message processing application or as a software application separate from the message processing application. A change in the content of the user interface component containing location-based information is notified to the user in step 510 which is executed when new information is available to the user in the user interface component. The notification can be the display of a certain icon on the display of the terminal, an audio or vibration signal, or some other indication provided by a generally known signalling method.

Next, in step 512, the routine checks whether the content of the location-based information transmitted by the service provider has changed. Part of the information content may still remain unchanged. The changed information can be distinguished from the new information for instance by means of an identifier in the transmitted message. The information stored earlier in the terminal and the changed information have the same identifier, whereas the identifier of completely new location-based information cannot be found in the stored information. If it is detected that the content of the stored location-based information has changed, step 514 is executed, i.e. the content of the user interface component containing location-based information is updated. After this, the change in the location-based information can be notified to the user by using one of the above-mentioned signalling methods.

If the terminal exits the area in which the service provider transmits location-based information as a result of step 516, the location-based information related to the area is deleted from the user interface component in step 518. The exiting of the terminal from the area can be detected based on the use of a positioning system, or the terminal detects that the location-based information related to the area is no longer available from the transmitter unit. Step 518 is also executed when the transmitter unit stops transmitting location-based information, even though the terminal still is in the service area of the transmitter unit. The execution of the method is stopped in step 520.

In addition to the above-mentioned message processing methods, location-based information can also be processed according to specific criteria in the terminal. The criteria may comprise for instance limitations in the reception of location-based information, the presentation format of location-based information in the dynamic user interface component, and the deletion of location-based information after a given time. The criteria can be defined by the user.

The method can be used in a terminal of the type described above. The method can also be implemented by a computer program product that encodes a process for the processing of location-based information in a mobile terminal, the computer process comprising the actions of the method described above. The computer program product can be stored on a computer program distribution medium. The terminal can read the computer program distribution medium. The distribution medium can be any known medium used for distributing a computer program from the manufacturer/vendor to the end user. The distribution medium can for instance be a medium readable by the terminal, a program storage medium or storage medium, a memory readable by the terminal, or a software distribution package, and a signal that the terminal can read, a telecommunications signal or a compressed software package.

Even though the invention is above described with reference to the example of the attached drawings, it is clear that the invention is not restricted to it but can be modified in many ways within the scope of the attached claims.

## Claims

1. A method for processing location-based information in a mobile terminal, the method comprising:
receiving (506) at the mobile terminal location-based information related to the location of the terminal from at least one transmitter unit,
displaying (508) the location-based information to the user dynamically using a specific menu-type user interface component configured to display the location-based information, in which user interface component the location-based information is divided into categories by subject;
**characterized in that** the location-based information is transmitted wirelessly using push technology and that the method further comprises:
receiving (506) the location-based information in a predefined service area for transmitting the location-based information; and
displaying the received location-based information without determining the location of the mobile terminal.

2. A method as claimed in claim 1, **characterized in that** the method further comprises:
receiving at the terminal also other than location-based information and identifying in the received information the location-based information before displaying the location-based information to the user.

3. A method as claimed in claim 1, **characterized in that** dynamic displaying comprises:
updating (514) the location-based information in the terminal to correspond to the new content when the content of the transmitted location-based information changes.

4. A method as claimed in claim 1, **characterized in that** dynamic displaying comprises:
deleting (518) the location-based information from the terminal when the terminal exits the area in which location-based information is transmitted.

5. A method as claimed in claim 1, **characterized in that** the method also comprises:
processing the earlier received location-based information according to a predefined criterion.

6. A method as claimed in claim 1, **characterized in that** the method also comprises:
determining the location of the terminal by using a positioning system in the terminal before displaying the location-based information to the user.

7. A method as claimed in claim 1, **characterized in that** the method also comprises:
determining the location of the terminal by using a positioning system connected to the terminal before displaying the location-based information to the user.

8. A method as claimed in any one of claims 6 to 7, **character**- **ized** in that the method also comprises:
updating (508, 514) the received information in the user interface component of the terminal containing location-based information, if the terminal is in the predefined area in which location-based information is transmitted.

9. A method as claimed in claim 1, **characterized in that** the user interface component designed for displaying location-based information comprises a dynamic menu for use in displaying location-based information to the user.

10. A method as claimed in claim 1, **characterized in that** the user interface component designed for displaying location-based information comprises a software application which is separate from the message processing application and used to display location-based information to the user.

11. A method as claimed in claim 1, **characterized in that** the user interface component designed for displaying location-based information comprises an additional component of the message processing application, which is used to display location-based information to the user.

12. A method as claimed in claim 1, **characterized in that** the method also comprises:
notifying (510) the user of a change in the user interface component containing location-based information as the location-based information is updated in the terminal.

13. A method as claimed in claim 12, **characterized in that** the change notification comprises:
notifying (510) the user of the change in the user interface component containing location-based information by an icon on the display of the user interface.

14. A method as claimed in claim 1, **characterized in that** the user interface component designed for displaying location-based information is a component of the message processing application capable of displaying also other information than location-based information.

15. A method as claimed in claim 14, **characterized by** displaying in a drop-down menu the categories of the user interface component designed for displaying location-based information.

16. A mobile terminal (104) comprising:
means (208) for receiving location-based information related to the location of the terminal from at least one transmitter unit,
means (210) for displaying the location-based information to the user dynamically using a specific menu-type user interface component (214) configured to display the location-based information, in which user interface component the location-based information is divided into categories by subject,
**characterized in that** the location-based information is transmitted wirelessly by using push technology and that the mobile terminal further comprises:
means for receiving the location-based information in a predefined service area for transmitting the location-based information; and
means for displaying the received location-based information without determining the location of the mobile terminal.

17. The mobile terminal of claim 16, further comprising means for performing the method according to any one of claims 2 to 15.

18. A computer program product embodied as a carrier medium carrying a computer-executable program comprising computer program code means adapted to perform the method steps of claim 1, when said program is run on a computer.

19. A system for transmitting location-based information, comprising:
a server unit (200) arranged to define content of the location-based information and an area in which the location-based information is transmitted;
at least one transmitter unit (102, 202) arranged to transmit the location-based information wirelessly to at least one mobile terminal (104) within a service area of the at least one transmitter unit,
wherein the location-based information is transmitted wirelessly using push technology and the server unit is arranged to determine an area within which the location-based information is transmitted by restricting the number of transmitter units transmitting the location-based information or a service area of the transmitter units transmitting the location-based information.

## Patentansprüche

1. Verfahren zum Verarbeiten von standortbezogenen Informationen in einem mobilen Endgerät, wobei das Verfahren die folgenden Schritte aufweist:
Empfangen (506) am mobilen Endgerät von standortbezogenen Informationen, die den Standort des Endgeräts betreffen, von mindestens einer Sendeeinheit,
dynamisches Anzeigen (508) der standortbezogenen Informationen für den Benutzer mittels einer spezifischen menüförmigen Benutzerschnittstellenkomponente, die konfiguriert ist, die standortbezogenen Informationen anzuzeigen, wobei in der Benutzerschnittstellenkomponente die standortbezogenen Informationen in Kategorien nach Gegenstand unterteilt werden;
**dadurch gekennzeichnet, dass** die standortbezogenen Informationen mittels Push-Technik drahtlos übertragen werden und dass das Verfahren ferner aufweist:
Empfangen (506) der standortbezogenen Informationen in einem vordefinierten Versorgungsgebiet zum Übertragen der standortbezogenen Informationen; und
Anzeigen der empfangenen standortbezogenen Informationen, ohne den Standort des mobilen Endgeräts zu bestimmen.

2. Verfahren nach Anspruch 1, **dadurch gekennzeichnet, dass** das Verfahren ferner aufweist:
Empfangen am Endgerät auch anderer standortbezogener Informationen und Identifizieren in den empfangenen Informationen der standortbezogenen Informationen vor dem Anzeigen der standortbezogenen Informationen für den Benutzer.

3. Verfahren nach Anspruch 1, **dadurch gekennzeichnet, dass** das dynamische Anzeigen aufweist:
Aktualisieren (514) der standortbezogenen Informationen im Endgerät, so dass sie dem neuen Inhalt entsprechen, wenn sich der Inhalt der übertragen standortbezogenen Informationen ändert.

4. Verfahren nach Anspruch 1, **dadurch gekennzeichnet, dass** das dynamische Anzeigen aufweist:
Löschen (518) der standortbezogenen Informationen aus dem Endgerät, wenn das Endgerät den Bereich verlässt, in dem die standortbezogenen Informationen übertragen werden.

5. Verfahren nach Anspruch 1, **dadurch gekennzeichnet, dass** das Verfahren außerdem aufweist:
Verarbeiten der früher empfangenen standortbezogenen Informationen gemäß einem vordefinierten Kriterium.

6. Verfahren nach Anspruch 1, **dadurch gekennzeichnet, dass** das Verfahren außerdem aufweist:
Bestimmen des Standorts des Endgeräts mittels eines Positionsbestimmungssystems im Endgerät vor dem Anzeigen der standortbezogenen Informationen für den Benutzer.

7. Verfahren nach Anspruch 1, **dadurch gekennzeichnet, dass** das Verfahren außerdem aufweist:
Bestimmen des Standorts des Endgeräts mittels eines Positionsbestimmungssystems, das mit dem Endgerät verbunden ist, vor dem Anzeigen der standortbezogenen Informationen für den Benutzer.

8. Verfahren nach einem der Ansprüche 6 bis 7, **dadurch gekennzeichnet, dass** das Verfahren außerdem aufweist:
Aktualisieren (508, 514) der empfangenen Informationen in der Benutzerschnittstellenkomponente des Endgeräts, die standortbezogene Informationen enthält, wenn sich das Endgerät im vordefinierten Bereich befindet, in dem standortbezogene Informationen übertragen werden.

9. Verfahren nach Anspruch 1, **dadurch gekennzeichnet, dass** die zum Anzeigen standortbezogener Informationen bestimmte Benutzerschnittstellenkomponente beim Anzeigen standortbezogener Informationen für den Benutzer ein dynamisches Menü aufweist.

10. Verfahren nach Anspruch 1, **dadurch gekennzeichnet, dass** die zum Anzeigen standortbezogener Informationen bestimmte Benutzerschnittstellenkomponente eine Softwareanwendung aufweist, die von der Nachrichtenverarbeitungsanwendung getrennt ist und verwendet wird, um für den Benutzer standortbezogene Informationen anzuzeigen.

11. Verfahren nach Anspruch 1, **dadurch gekennzeichnet, dass** die zum Anzeigen standortbezogener Informationen bestimmte Benutzerschnittstellenkomponente eine zusätzliche Komponente der Nachrichtenverarbeitungsanwendung aufweist, die verwendet wird, um für den Benutzer standortbezogene Informationen anzuzeigen.

12. Verfahren nach Anspruch 1, **dadurch gekennzeichnet, dass** das Verfahren außerdem aufweist:
Benachrichtigen (510) des Benutzers über eine Änderung der Benutzerschnittstellenkomponente, die standortbezogene Informationen enthält, wenn die standortbezogenen Informationen im Endgerät aktualisiert werden.

13. Verfahren nach Anspruch 12, **dadurch gekennzeichnet, dass** die Änderungsbenachrichtigung aufweist:
Benachrichtigen (510) des Benutzers über die Änderung der Benutzerschnittstellenkomponente, die standortbezogene Informationen enthält, durch ein Icon auf der Anzeige der Benutzerschnittstelle.

14. Verfahren nach Anspruch 1, **dadurch gekennzeichnet, dass** die zum Anzeigen standortbezogener Informationen bestimmte Benutzerschnittstellenkomponente eine Komponente der Nachrichtenverarbeitungsanwendung ist, die zum Anzeigen auch anderer Informationen als die standortbezogenen Informationen imstande ist.

15. Verfahren nach Anspruch 14, **gekennzeichnet durch** Anzeigen in einem Aufklappmenü der Kategorien der zum Anzeigen standortbezogener Informationen bestimmten Benutzerschnittstellenkomponente.

16. Mobiles Endgerät (104), das Folgendes aufweist:
Mittel (208) zum Empfangen standortbezogener Informationen, die den Standort des Endgeräts betreffen, von mindestens einer Sendeeinheit,
Mittel (210) zum dynamischen Anzeigen der standortbezogenen Informationen für den Benutzer mittels einer spezifischen menüförmigen Benutzerschnittstellenkomponente (214), die konfiguriert ist, die standortbezogenen Informationen anzuzeigen, wobei in der Benutzerschnittstellenkomponente die standortbezogenen Informationen in Kategorien nach Gegenstand unterteilt werden,
**dadurch gekennzeichnet, dass** die standortbezogenen Informationen mittels einer Push-Technik drahtlos übertragen werden und dass das mobile Endgerät ferner aufweist:
Mittel zum Empfangen der standortbezogenen Informationen in einem vordefinierten Versorgungsgebiet zum Übertragen der standortbezogenen Informationen; und
Mittel zum Anzeigen der empfangenen standortbezogenen Informationen, ohne den Standort des mobilen Endgeräts zu bestimmen.

17. Mobiles Endgerät nach Anspruch 16, das ferner Mittel zum Ausführen des Verfahrens nach einem der Ansprüche 2 bis 15 aufweist.

18. Computerprogrammprodukt, das als ein Trägermedium ausgeführt ist, das ein computerausführbares Programm trägt, das ein Computerprogrammcodemittel aufweist, das eingerichtet ist, die Verfahrensschritte von Anspruch 1 auszuführen, wenn das Programm auf einem Computer ausgeführt wird.

19. System zum Übertragen standortbezogener Informationen, das Folgendes aufweist:
eine Servereinheit (200), die eingerichtet ist, einen Inhalt der standortbezogenen Informationen und einen Bereich zu definieren, in dem die standortbezogenen Informationen übertragen werden;
mindestens eine Sendeeinheit (102, 202), die eingerichtet ist, die standortbezogenen Informationen innerhalb eines Versorgungsgebiets der mindestens einen Sendeeinheit drahtlos an mindestens ein mobiles Endgerät (104) zu übertragen,
wobei die standortbezogenen Informationen mittels Push-Technik drahtlos übertragen werden und die Servereinheit eingerichtet ist, einen Bereich zu bestimmen, in dem die standortbezogenen Informationen übertragen werden, indem die Anzahl der Sendeeinheiten, die die standortbezogenen Informationen übertragen, oder ein Versorgungsgebiet der Sendeeinheiten eingeschränkt wird, die die standortbezogenen Informationen übertragen.

## Revendications

1. Procédé de traitement d'informations de position dans un terminal mobile, le procédé comprenant :
la réception (506) au niveau du terminal mobile, d'informations de position relatives à la position du terminal depuis au moins une unité émettrice, l'affichage (508) des informations de position à l'utilisateur en utilisant dynamiquement un composant d'interface utilisateur du type à menu spécifique configuré pour afficher les informations de position, dans lequel composant d'interface utilisateur les informations de position sont divisées en catégories par sujet ;
caractérisé en que les informations de position sont transmises en mode sans fil en utilisant la technologie de transmission forcée et le procédé comprenant en outre :
la réception (506) des informations de position dans une zone de desserte prédéfinie pour transmettre les informations de position ; et
l'affichage des informations de position reçues sans déterminer la position du terminal mobile.

2. Procédé selon la revendication 1, **caractérisé en ce qu'**il comprend en outre :
la réception également au niveau du terminal d'informations autres que des informations de position et l'identification dans les informations reçues des informations de position avant l'affichage des informations de position à l'utilisateur.

3. Procédé selon la revendication 1, **caractérisé en ce que** l'affichage dynamique comprend :
l'actualisation (514) des informations de position dans le terminal pour qu'elles correspondent au nouveau contenu quand le contenu des informations de position transmises change.

4. Procédé selon la revendication 1, **caractérisé en ce que** l'affichage dynamique comprend :
la suppression (518) des informations de position dans le terminal quand le terminal sort de la zone dans laquelle les informations de position sont transmises.

5. Procédé selon la revendication 1, **caractérisé en ce qu'**il comprend en outre :
le traitement des informations de position reçues antérieurement en fonction d'un critère prédéfini.

6. Procédé selon la revendication 1, **caractérisé en ce qu'**il comprend en outre :
la détermination de la position du terminal en utilisant un système de positionnement dans le terminal avant l'affichage des informations de position à l'utilisateur.

7. Procédé selon la revendication 1, **caractérisé en ce qu'**il comprend en outre :
la détermination de la position du terminal en utilisant un système de positionnement connecté au terminal avant l'affichage des informations de position à l'utilisateur.

8. Procédé selon l'une quelconque des revendications 6 à 7, **caractérisé en ce qu'**il comprend en outre :
l'actualisation (508, 514) des informations reçues dans le composant d'interface utilisateur du terminal contenant des informations de position,
si le terminal se trouve dans la zone prédéfinie dans laquelle les informations de position sont transmises.

9. Procédé selon la revendication 1, **caractérisé en ce que** le composant d'interface utilisateur conçu pour afficher des informations de position comprend un menu dynamique destiné à être utilisé dans l'affichage d'informations de position à l'utilisateur.

10. Procédé selon la revendication 1, **caractérisé en ce que** le composant d'interface utilisateur conçu pour afficher des informations de position comprend une application logicielle distincte de l'application de traitement de message et utilisée pour afficher les informations de position à l'utilisateur.

11. Procédé selon la revendication 1, **caractérisé en ce que** le composant d'interface utilisateur conçu pour afficher les informations de position comprend un composant supplémentaire de l'application de traitement de message, lequel est utilisé pour afficher des informations de position à l'utilisateur.

12. Procédé selon la revendication 1, **caractérisé en ce qu'**il comprend en outre :
la notification (510) à l'utilisateur d'un changement du composant d'interface utilisateur contenant des informations de position quand les informations de position sont actualisées dans le terminal.

13. Procédé selon la revendication 12, **caractérisé en ce que** la notification de changement comprend :
la notification (510) à l'utilisateur du changement du composant d'interface utilisateur contenant des informations de position par une icône sur l'affichage de l'interface utilisateur.

14. Procédé selon la revendication 1, **caractérisé en ce que** le composant d'interface utilisateur conçu pour afficher des informations de position est un composant de l'application de traitement de message capable d'afficher également des informations autre que des informations de position.

15. Procédé selon la revendication 14, **caractérisée par** l'affichage dans un menu défilant des catégories du composant d'interface utilisateur conçu pour afficher des informations de position.

16. Terminal mobile (104) comprenant :
un moyen (208) pour afficher des informations de position relatives à la position du terminal depuis au moins une unité émettrice,
un moyen (210) pour afficher les informations de position à l'utilisateur en utilisant dynamiquement un composant d'interface utilisateur spécifique du type menu (214) configurée pour afficher les informations de position, dans lequel composant d'interface utilisateur les informations de position sont divisées en catégories par sujet ;
caractérisé en que les informations de position sont transmises en mode sans fil en utilisant la technologie de transmission forcée et le terminal mobile comprend en outre :
un moyen de réception des informations de position dans une zone de desserte prédéfinie pour transmettre les informations de position ; et
un moyen d'affichage des informations de position reçues sans déterminer la position du terminal mobile.

17. Terminal mobile selon la revendication 16, comprenant en outre des moyens pour exécuter le procédé selon l'une quelconque des revendications 2 à 15.

18. Produit de programme informatique mis en oeuvre sous forme de support porteur portant un programme exécutable par ordinateur comprenant un moyen de code de programme informatique adapté pour exécuter les étapes de procédé de la revendication 1, quand ledit programme est exécuté sur un ordinateur.

19. Système de transmission d'informations de position, comprenant :
une unité de serveur (200) agencée pour définir le contenu des informations de position et une zone dans laquelle les informations de position sont transmises ;
au moins une unité émettrice (102, 202) agencée pour transmettre les informations de position en mode sans fil à au moins un terminal sans fil (104) dans une zone de desserte de l'au moins une unité émettrice,
dans lequel les informations de position sont transmises en mode sans fil en utilisant une technologie de transmission forcée et l'unité de serveur est agencée pour déterminer une zone dans laquelle les informations de position sont transmises en limitant le nombre d'unités émettrices transmettant les informations de position ou une zone de desserte des unités émettrices transmettant les informations de position.
